# EUROPEAN PATENT APPLICATION

(11) **EP 1 761 093 A1**
(43) Date of publication of application: **07.03.2007**
(21) Application number: 05748914.8
(22) Date of filing: 08.06.2005
(51) Int. Cl.: H04Q 7/38, G06F 1/00, G06K 17/00, G06K 19/00

(54) **MOBILE TERMINAL RECEIVING DATA FROM RFID TAG AND MOBILE TERMINAL CONTROL POLICY IDENTIFICATION METHOD**

(30) Priority: 10.06.2004 JP 2004172133
(71) Applicant: MATSUSHITA ELECTRIC INDUSTRIAL CO., LTD., Osaka 571-8501 (JP)
(72) Inventor: ISHII, Tomoki c/o Matsushita El.Ind.Co.Ltd., Chuo-ku, Osaka-shi, Osaka 540-6319 (JP)
(74) Representative: Eisenführ, Speiser & Partner
(86) International application number: PCT/JP2005/010462
(87) International publication number: WO 2005/122625

(57) **Abstract**

The present invention provides a mobile terminal that can follow a control policy decided for an applicable area, as well as a mobile terminal control policy specification system. The present invention provides mobile terminals 3a, b, which receive data from RFID tags 5a, b. Specifically, the mobile terminals 3a, b each comprise a storage unit 33, a determination unit 34, and a control unit 36. The storage unit 33 associates and stores control policies that control the mobile terminals 3a, b with policy identifiers that identify the control policies. The determination unit 34 determines whether any one of the policy identifiers stored by the storage unit 33 is included in the received data. If the determination unit 34 determines that any one of the stored policy identifiers is included in the received data, then the control unit 36 will control the mobile terminal based on the control policy associated with the received policy identifier.

## Description

### [FIELD OF THE INVENTION]

The present invention relates to a mobile terminal that receives data from an RFID tag, and a mobile terminal control policy specifying method and program.

### [RELATED ART]

Mobile terminals, such as mobile telephones, permeate our daily lives because of their superior convenience. A user who owns a mobile terminal can make a call at all kin ds of locations, e.g., a movie theater, a museum, a hospital, and on a train. However, to prevent behavior that disturbs other people, there are also locations where mobile terminal calls are prohibited, such as a hospital, a museum, and on a train. Although announcements are made at such locations to prohibit mobile terminal calls, it is often the case that only a poster is posted to the effect that calling is prohibited. Accordingly, it is left to each user to determine whether or not to actually communic ate by a mobile terminal in such locations.

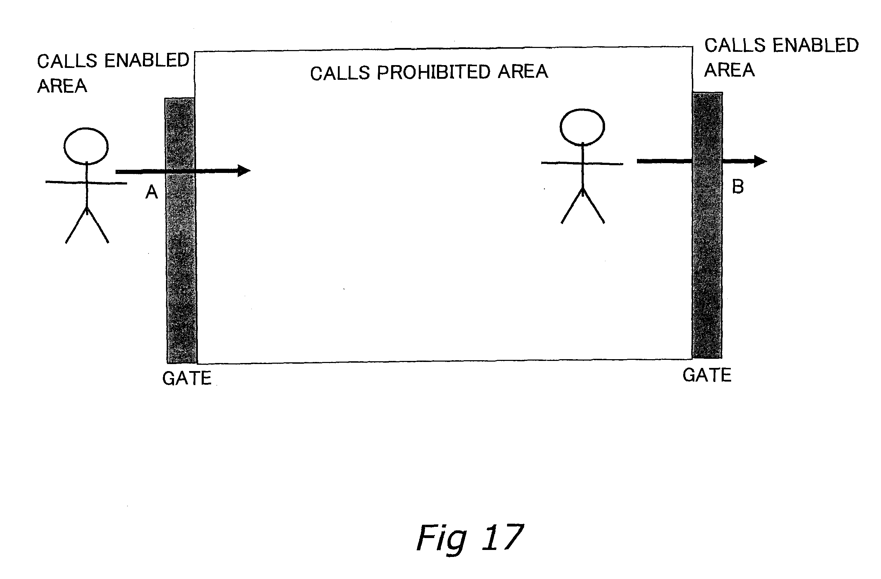

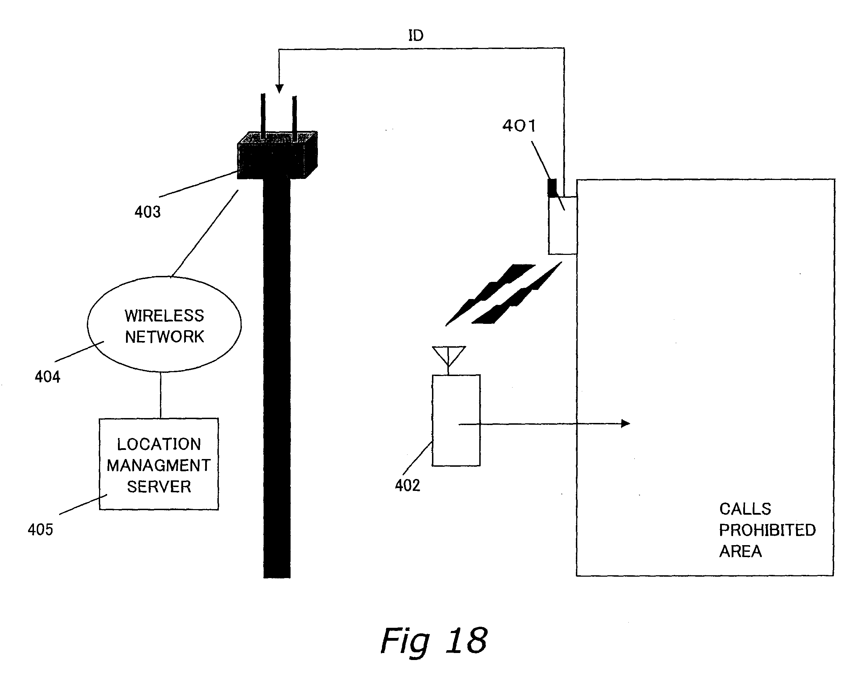

In recent years, there are cases of using a method to control mobile terminals at locations where mobile terminal calls are prohibited so that calls are forcibly prohibited. FIG. 17 depicts one example thereof. FIG. 17 depicts a case wherein a user who owns a mobile terminal moves between a calls enabled area and a calls prohibited area. Here, the "calls prohibited area" in FIG. 17 is a closed space. Hereinbelow, the closed space will be, for example, the interi or of a building. The gate ofthe building is provided with a sensor that detects the entrance and exit of a user, and a send unit that sends a signal to the mobile terminal of the user based on a detection signal from the sensor. When the user moves from the calls enabled area to the calls prohibited area (A), the sensor detects the movement direction of the user, and the send unit sends a signal to the mobile terminal based on the detection signal of the sensor. Based on this signal, the mobile terminal controls its own terminal by setting it to the inbound disabled state. In addition, when the user moves from the calls prohibited area to the calls enabled area (B), the sensor detects the movement direction of the user, and the send unit sends a signal to the mobile terminal based on the detection signal of the sensor. Based on this signal, the mobile terminal controls its own terminal by setting it to the inbound enabled state.

In addition, Patent Document 1 describes a system that controls a mobile telephone at a location where mobile telephone calls are prohibited so that calls are forcibly prohibited. FIG. 18 is a system conceptual diagram according to Patent Document 1. With the system in FIG. 18, a simple base station 401 , which is installed at a building entrance and the like, sends a power off signal to a mobile telephone 402 of a user who has moved to the interior of the building. The mobile telephone 402 that receives the power off signal notifies the basic base station 401 of the telephone number of its own terminal. Furthermore, the mobile telephone 402 notifies and registers with a location management server 405 located within a wireless network 404, via the basic base station 401 and a public base station 403, that it has turned its power off. The operation for inbound calls to the mobile telephone 402 is performed referencing the registration details of the location management server 405.
**[PATENT DOCUMENT 1]** Japanese Published Unexamined Patent Application No. H 11-69412

### [DISCLOSURE OF THE INV ENTION]

Nevertheless, the method discussed above has the following problems.

In the method of FIG. 17, the user definitely must pass through the entrance/exit where the sensor is installed that detects the user's movement direction. In other words, the applicable area where it is desired to enforce a control policy upon the mobile terminal must definitely be a closed space that is partitioned by walls, and this closed space must be provided with a gate. In an area of a type not partitioned by walls, the user is not necessarily limited to passing through the gate. Namely, it is difficult to force a mobile terminal to follow a control policy in an area of a type not partitioned by walls. In addition, if, for example, one area is subdivided into a calls enabled area and a calls prohibited area, each of those subdivided areas must be a closed space that must be provided with a gate. Furthermore, a sensor and a send unit must be installed in each gate. Accordingly, costs are incurred to install the gates, sens ors, and send units in each area.

In addition, the system in Patent Document 1 requires numerous pieces of equipment, such as the basic base station 401, the public base station 403 , the wireless network 404 , and the location management server 405 . In other words, using the system in Patent Document 1 incurs costs.

The present invention was made to solve these problems, and it is an object of the present invention to provide a mobile terminal that can follow a control policy determined for an area, regardless of the intention of the user, and a mobile terminal control policy specification system.

To solve the abovementioned problems, the first invention provides a mobile terminal that receives data from an RFID (Radio Frequency IDentification) tag. The mobile terminal according to the first invention comprises a storing unit, a determining unit, and a controlling unit. The storing unit associates and stores control policies, which control the mobile terminal with policy identifiers, which identify the control policies. The determining unit determines whether any one of the policy identifiers stored by the storing unit is included in the received data. The controlling unit that will, if the determining unit has determined that any one of the stored policy identifiers is included in the received data, control the mobile terminal based on the control policy associated with the received policy identifier.

The mobile terminal control terminal in accordance with the control policy decided for the specified area. For example, let us consider a case wherein a user of the present mobile terminal has entered an area wherein calls of a mobile terminal, located in a hospital, on a train, and the like, are prohibited. Furthermore, let us consider that the data stored by the RFID tag is, for example, a control policy that states, for example, "turn power of mobile terminal off," and a policy identifier, which identifies the control policy. In this case, the mobile terminal receives data from the RFID tag installed in the calls prohibited area, and searches for the policy identifier. Furthermore, when the mobile terminal specifies the control policy in the data, it turns its power off based on the control policy. Accordingly, the user of the mobile terminal can follow th e control policy decided for the specified area without violating the established social order.

The second invention provides a mobile terminal as recited in the first invention, further comprising a sending unit that sends a request to the RFID tag to send the policy identifier at an arbitrary timing generated by a prescribed event at the mobile terminal,.

If the mobile terminals simultaneously send requests to the RFID tag to send the policy identifier, collisions between send requests will occur. The refore, each mobile terminal sends a request to the RFID tag to send the policy identifier when a prescribed event occurs at its own terminal. The timing at which the prescribed event is generated at its own terminal differs for each mobile terminal. This consequently reduces the probability that the mobile terminals will simultaneously send requests to the RFID tag to send the policy identifier. Namely, the timing at which each mobile terminal sends a request to the RFID tag to send the policy identifier varies. Accordingly, it is possible to avoid a collision among policy identifier send requests.

The third invention provides a mobile terminal as recited in the second invention, further comprising a communicating unit that communicates with other termina Is. Further, the sending unit interrupts communication in the communicating unit and sends a request to the RFID tag to send the policy identifier.

If the mobile terminals simultaneously send requests to the RFID tag to send the policy identifier, a collision among send requests will occur. If there is an inbound call from another terminal, for example, then the present mobile terminal sends a policy identifier send request before sounding the call tone in order to inform the user of the inbound call. Namely, the sending unit interrupts the communication with the other terminal in the communicating unit, and sends a policy identifier send request. The timing at which its own terminal receives an inbound call from the other terminal differs for each mobile terminal. This consequently reduces the probability that the mobile terminals will simultaneously send requests to the RFID tag to send the policy identifier. Namely, the timing at which the mobile terminals send requests to the RFID tag to send the policy identifier varies. Accordingly, it is possible to avoid collisions among policy identifier send requests.

The fourth invention provides a mobile terminal as recited in the second invention, further comprising a communicating unit that communicates with other terminals. Further, the sending unit detects the end of communication in the communicating unit and sends a request to the RFID tag to send the policy identifier.

If the mobile terminals simultaneously send requests to the RFID tag to send the policy identifier, a collision will occur among the send requests. If, for example, an e-mail is received from another terminal, then the present mobile terminal sends a policy identifier send request. The timing at which its own terminal receives an e -mail from the other terminal differs for each mobile terminal. This consequently reduces the possibility that the mobile terminals will simultaneously send requests to the RFID tag to send the policy identifier. Namely, the timing at which the mobile terminals se nd requests to the RFID tag to send the policy identifier varies. Accordingly, it is possible to avoid collisions among the policy identifier send requests.

The fifth invention provides a mobile terminal as recited in second invention, further comprising a first detecting unit that detects an instruction from a user of the mobile terminal. Further, if the first detecting unit has detected an instruction from the user, then the sending unit will send a request to the RFID tag to send the policy identifier.

If the mobile terminals simultaneously send requests to the RFID tag to send the policy identifier, a collision will occur among the send requests. Let us assume that the present mobile terminal has, for example, a TV function. If the user of a mobile terminal wherein the TV function is already started presses a button to increase the volume of the TV function, then the mobile terminal sends, before increasing the volume of the TV function of the mobile terminal, a policy identifier send request. The tim ing at which the users of the mobile terminals press the volume button differs for each mobile terminal. This consequently reduces the probability that the mobile terminals will simultaneously send requests to the RFID tag to send the policy identifier. Accordingly, it is possible to avoid collisions among the policy identifier send requests.

The sixth invention provides a mobile terminal as recited in the second invention, wherein the storing unit further stores an arbitrary application, and further comp rises a second detecting unit that detects the startup of the stored application. Further, if the second detecting unit has detected the startup of the stored application, then the sending unit will send a request to the RFID tag to send the policy identifier.

If the mobile terminals simultaneously send requests to the RFID tag to send the policy identifier, collisions will occur among the send requests. Let us assume that the present mobile terminal has, for example, a music function. If the user of a mo bile terminal attempts to start and use the music function, the mobile terminal sends a policy identifier send request. The timing at which the users of the mobile terminals start an arbitrary application, such as the music function, differs for each mobile terminal. This consequently reduces the probability that the mobile terminals will simultaneously send requests to the RFID tag to send the policy identifier. Accordingly, it is possible to avoid collisions among the policy identifier send requests.

The seventh invention provides a mobile terminal as recited in the first invention, wherein the storing unit discriminates the current policy identifier that identifies the current control policy of the mobile terminal; and the determining unit determines whether any one of the policy identifiers stored by the storing unit is included in the newly received data every time data is received. It further comprises a comparing unit that will, if the determining unit has determined that any one of the stored policy identifiers is included in the newly received data, compare the newly received policy identifier and the current policy identifier. Further, if the newly received policy identifier and the current policy identifier are different, then the storing unit will store the newly received policy identifier as the current policy identifier.

If a policy identifier is received that differs from the current control policy of its own terminal, the mobile terminal controls its own terminal based on the control policy indicated by the newly received policy identifier. Namely, the mobile terminal can always follow the latest control policy.

In addition, in order to solve the abovementioned problems, the eighth invention provides a control policy specifying method for a mobile terminal that receives data from an RFID tag. Specifically, the eighth invention comprising the steps of:
- associating and storing control policies, which control the mobile terminal with policy identifiers which identify the control policy;
- determining whether any one of the stored policy identifiers is included in the received data; and
- if it is determined that any one of the stored policy identifiers is included in the received data, then controlling the mobile terminal based on the control policy associated with the received policy identifier.

According to the present mobile terminal control policy specifying method, the mobile terminal controls its own terminal in accordance with the control policy decided for the specified area. For example, let us consider a case wherein a user of a mobile terminal has entered an area wherein calls of a mobile terminal, located in a hospital, on a train, and the like, are prohibited. Furthermore, let us assume that the data stored by the RFID tag is the con trol policy stating, for example, "turn the power of the mobile terminal off," and a policy identifier that identifies the control policy. In this case, the mobile terminal receives data from the RFID tag, which is installed in a calls prohibited area, and searches for the policy identifier. Furthermore, when the mobile terminal specifies the control policy in the data, it turns its power off, based on the control policy. Accordingly, the user of the mobile terminal can follow the control policy decided for the specified area, without violating the established social order.

In addition, in order to solve the abovementioned problems, the ninth invention provides a control policy specification system that comprises a plurality of RFID tags and a mobile terminal that receives data from the plurality of RFID tags. The mobile terminal according to the present system comprises a storing unit, a determining unit, and a controlling unit. The storing unit associates and stores control policies which control the mobile terminal with policy identifiers which identify the control policy. The determining unit determines whether any one of the policy identifiers stored by the storing unit is included in the received data. The controlling unit that will, if the determining unit has determined that any one of the stored policy identifiers is included in the received data, control the mobile terminal based on the control policy associated with the received policy identifier. Further, each of the plurality of RFID tags comprises: a generating unit that generates a slot for each of the RFID tags based on unique information that identifies each RFID tag; and a sending unit that uses the slot generated by the generating unit to sequentially and time divisionally send the policy identifier.

The RFID tag generates the timing by which it sends the policy identifier to the mobile terminal. The policy identifier sent by the RFID tag to the mobile terminal is time divisionally sent based on a slot generated by each RFID tag. The mobile terminal sequentially receives the arriving policy identifiers. Thereby, the policy identifiers sent from the plurality of RFID tags do not overlap. Accordingly, it is possible to avoid a collision among the policy identifiers sent from the plurality of RFID tags.

The tenth invention provides a control policy specification system as recited in the ninth invention, wherein the mobile terminal further comprises a sending unit that sends a request to each of the plurality of RFID tags to send the policy ide ntifier. Further, if the policy identifier has been received from at least one RFID tag among the plurality of RFID tags, then the determining unit will stop the sending unit from sending a request to send the policy identifier.

Let us assume that the plurality of the RFID tags is located within the same area and have the same policy identifier. According to the present control policy specification system, when the mobile terminal receives the policy identifier from at least one RFID tag, it stops policy identifier send requests. Namely, the mobile terminal makes do without receiving the identical policy identifier multiple times from the plurality of RFID tags. Accordingly, the power consumption of the mobile terminal can be reduced.

In addition, in order to solve the abovementioned problems, the eleventh invention provides a control policy specification program executed by a computer installed on a mobile terminal that receives data from an RFID tag. Specifically, the following units are included:
- a storing unit that associates and stores control policies, which control the mobile terminal with policy identifiers, which identify the control policies;
- a determining unit that determines whether any one of the policy identifiers stored by the storing unit is included in the received data; and
- a controlling unit that will;, if the determining unit has determined that any one of the stored policy identifiers is included in the received data, control the mobile terminal based on the control policy associated with the received policy identifier.

According to the present control policy specification program, the mobile terminal controls its own terminal in accordance with the control policy decided for the specified area. For example, let us consider a case wherein a user of the present mobile terminal has entered an area wherein calls of a mobile terminal, located in a hospital, on a train, and the like, are prohibited. Furthermore, let us assume that the data stored by the RFID tag is the control policy stating, for example, "turn the power of the mobile terminal off," and the policy identifier that identifies the control policy. In this case, the mobile terminal receives data from the RFID tags installed in the calls prohibited area, and searches for the policy identifier. Furthermore, when the mobile terminal specifies the control policy in the data, it turns its power off, based on the control policy. Accordingly, the user of the mobile terminal can follow the control policy decided for the specified area, without violating the established social order.

According to the present invention, the mobile terminal can follow the control policy in an applicable area, regardless of the user's intention.

### [BRIEF DESCRIPTION OF DRAWINGS]

FIG. 1 is a block diagram of a control policy specification system according to the first embodiment.
FIG. 2 is an explanatory diagram of the policy code information possessed by an RFID tag.
FIG. 3 is a functional block diagram of a mobile terminal according to the first embodiment.
FIG. 4 is a conceptual diagram of the policy information stored by the storage unit according to the first embodiment.
FIG. 5 is an operational flow chart of the control policy specification system according to the first embodiment.
FIG. 6 is a block diagram of the control policy specification system according to the first embodiment.
FIG. 7 is an operational flow chart of the control policy specification system according to the first embodiment.
FIG. 8 is a block diagram of the control policy specification system according to the second embodiment.
FIG. 9 is a functional block diagram of the mobile terminal according to the second embodiment.
FIG. 10 is a conceptual diagram of the policy information stored by the storage unit according to the second embodiment.
FIG. 11 is an operational flow chart of the control policy specification system according to the second embodiment.
FIG. 12 is a block diagram of the control policy specification system according to the third embodiment.
FIG. 13 is a timing chart that depicts the operation of a mobile terminal and a plurality of RFID tags according to the third embodiment.
FIG. 14 is a block diagram of the control policy specification system according to the fourth embodiment.
FIG. 15 is a conceptual diagram of the policy information stored by the storage unit according to the fourth embodiment.
FIG. 16 is an operational flow chart of the control policy specification system according to the fourth embodiment.
FIG. 17 is one example of a conventional method of controlling a mobile terminal.
FIG. 18 is a system block diagram that uses a mobile terminal and an RFID tag according to Patent Document 1.

### [PREFERRED EMBODIMENTS]

### <FIRST EMBODIMENT>

### (1) CONSTITUTION OF SYSTEM

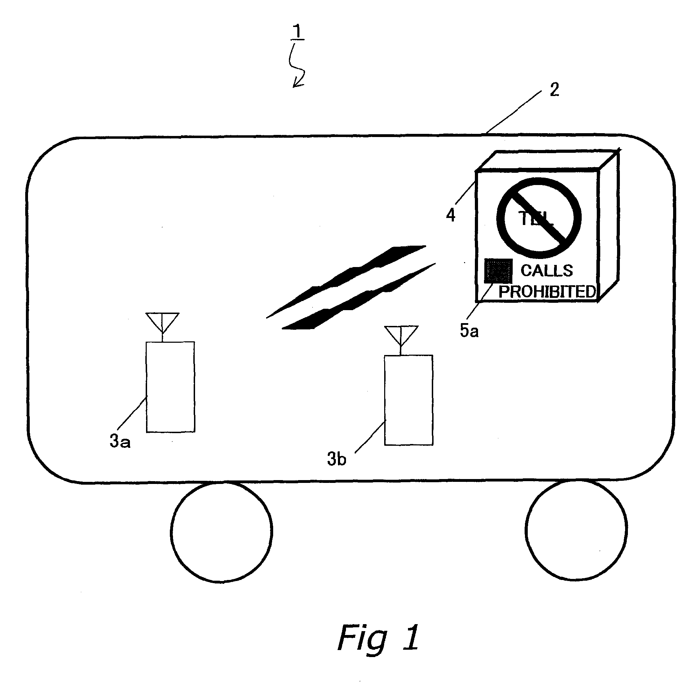

FIG. 1 is a block diagram of a control policy specification system according to the first embodiment of the present invention. A control policy refers to a control signal for the purpose of forcibly controlling a mobile terminal based on a rule determined for an arbitrary area. The first embodiment takes as an example a system that enforces a control policy inside a train 2 upon, for example, mobile terminals 3a and 3b inside the train 2. A control policy specification system 1 in FIG. 1 comprises a poster 4 and an RFID tag 5a inside the train 2. The poster 4 posts a control policy for enforcing etiquette inside the train 2 upon the mobile terminals 3a, b inside the train 2, and an RFID tag 5a is affixed to the poster 4. The RFID tag 5a stores a policy code, which includes a policy ID and the like, for specifying a control policy inside the train 2, and sends the policy code to the mobile terminals 3a, b. Furthermore, the RFID tag 5a and an RFID tag 5b according to the present embodiment have no internal power supply, but convert a carrier wave sent from external equipment, such as the mobile terminals 3a, b, to electric power, and use such to provide the policy code to the mobile terminals 3a, b. Namely, the present embodiment supposes a case wherein the RFID tags 5a, b are passive tags.

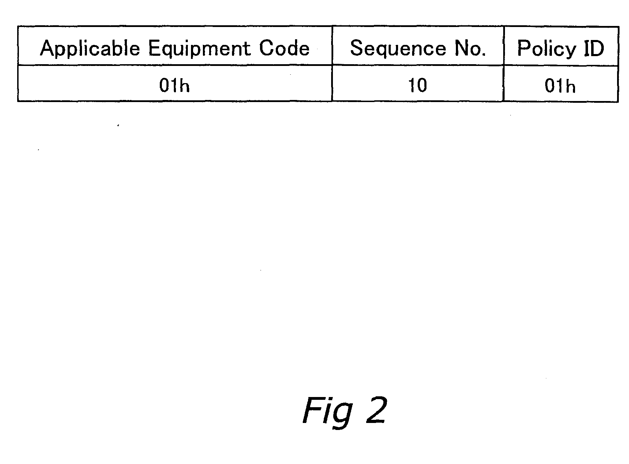

FIG. 2 is an explanatory diagram of the policy code information stored by the RFID tags 5a, b. As depicted in FIG. 2, the policy code stored by the RFID tags 5a, b comprises a policy ID, an applicable equipment code, and a sequence number. The policy ID identifies the control policy within the area where the RFID tags 5a, b are located. The applicable equipment code indicates the equipment subject to the enforcement of the control policy. The sequence number is unique information for identifying the RFID tags 5a, b.

If the mobile terminals 3a, b receive a policy code from the RFID tag 5a, then each mobile terminal specifies the control policy within the train 2 based thereon and controls its own terminal based on the specified control policy.

Furthermore, although the RFID tag 5 a is affixed to the poster 4 in the present embodiment, the present invention is not limited thereto. The RFID tag 5 a may be installed anywhere as long as the location is one whereat the policy ID corresponding to the control policy within the train 2 can be sent to the mobile terminals 3a, b therein.

### (2) FUNCTIONS

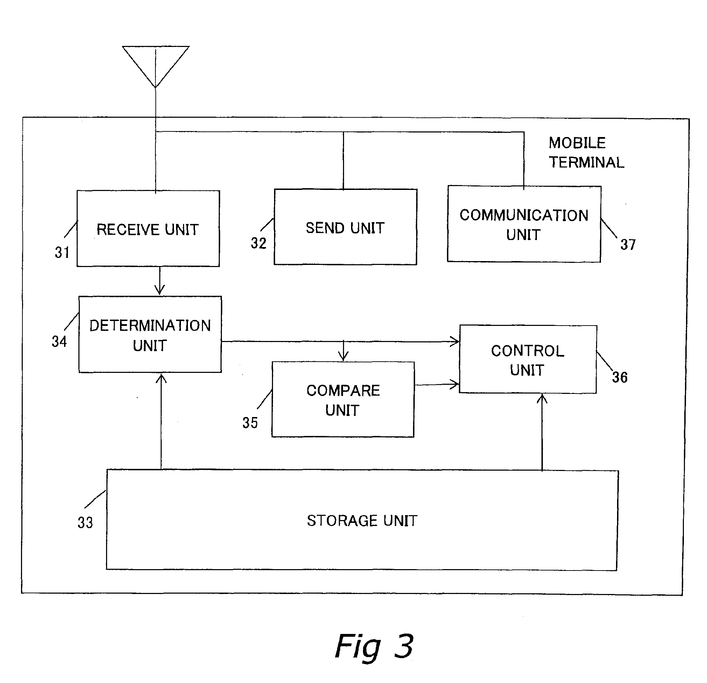

The following explains the functions ofthe mobile terminals 3a, b according to the first embodiment of the present invention. Here, the mobile terminals 3a, b have the same functional constitution, and therefore just the mobile terminal 3a is explained hereinbelow. FIG. 3 is a functional block diagram of the mobile terminal 3a according to the first embodiment of the present invention. The mobile terminal 3a according to the present embodiment comprises a function that acts as a reader that receives data from the RFID tags 5a, b. Specifically, the mobile terminal 3a in FIG. 3 comprises a receive unit 31, a send unit 32, a storage unit 33, a determination unit 34, a compare unit 35, a control unit 36, and a communication unit 37 . Each of these functions will be discussed in detail below.

### (2-1) RECEIVE UNIT

The receive unit 31 receives data that includes the policy code from the RFID tags 5a, b.

### (2-2) SEND UNIT

The send unit 32 sends, at an arbitrary timing generated by a prescribed event in its own terminal, a request to the RFID tags 5a, b to send the policy code, which includes the policy ID. Furthermore, the send unit 32 sends a carrier wave that supplies electric power to the RFID tags 5a, b. The "prescribed event of its own terminal" is discussed later.

### (2-3) STORAGE UNIT

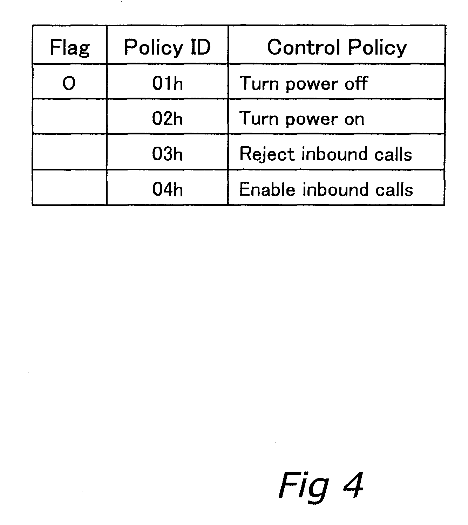

The storage unit 33 stores the policy information. The policy information is stored as one record that includes the control policy, which controls the mobile terminal, and the policy ID, which identifies the relevant control policy. FIG. 4 is a conceptual diagram of the policy information stored by the storage unit 33. Specifically, the storage unit 33 associates and stores the policy ID 01h and the control policy "turn power off." The storage unit 33 associates and stores the policy ID "02h" and the control policy "turn power on." The storage unit 33 associates and stores the policy ID "03h" and the control policy "reject inbound calls." The storage unit 33 associates and stores the policy ID "04h" and the control policy "allow inbound calls." Furthermore, the association information of the policy IDs and the control policies stored by the storage unit 33 is shared with other mobile terminals and the RFID tags 5a, b. The storage unit 33 cannot overwrite the association information between the policy ID and the control policy. If the association information between the policy ID and the control policy stored by the storage unit 33 were overwritten, it would create a case wherein the association information between the policy ID and the control policy would differ for each mobile terminal. In so doing, the control policy corresponding to the policy ID would differ for each mobile terminal, even if each mobile terminal were to receive the identical policy code, which would result in differing control for each mobile terminal. Accordingly, a case would unfortunately arise wherein a unified control policy could not be enforced upon the mobile terminals.

In addition, if the association information between a new policy ID and a control policy is added to the mobile terminal 3a, then the mobile terminal 3a can acquire the relevant association information from an external apparatus using an arbitrary method. As an arbitrary method, a method can be cited wherein, for example, an SD card is used. The user of the mobile terminal 3a inserts the SD card, wherein the association information between the new policy ID and the control policy is stored, into the mobile terminal 3a, and the storage unit 33 of the mobile terminal 3a may read and append new association information in the SD card. In addition, the storage unit 33 of the mobile terminal 3a may download new relevant association information from servers (not shown) on the network. Here, it is essential that the newly acquired association information between the policy ID and the control policy cannot be overwritten.

In addition, the storage unit 33 discriminatively stores the current control policy (hereinafter, referred to as the current control policy) of its own terminal. For example, as depicted in FIG. 4, the storage unit 33 further stores a flag for identifying the current control policy. The flag indicates which of the policy information records is the current control policy. The position of the flag changes attendant with modifications to the current control policy.

### (2-4) DETERMINATION UNIT

The determination unit 34 determines whether any one of the policy identifiers stored by the storage unit 33 is included in the data received from the RFID tags 5a, b. In other words, the determination unit 34 searches to find whether one of the policy identifiers stored by the storage unit 33 matches the policy ID in the data received from the RFID tags 5a, b. Let's consider an example wherein the data received by the receive unit 31 has a policy ID "01h" in the policy code. The determination unit 34 performs a search to find whether any one of the policy IDs "01h," "02h," "03h," "04h" stored by the storage unit 33 is in the received data. In the present embodiment, the policy ID "01h" stored by the storage unit 33 matches the policy ID "01h" in the data received by the receive unit 31. In this case, the determination unit 34 determines that the policy identifier "01h" stored by the storage unit 33 is included in the data received by the receive unit 31. Furthermore, the determination unit 34 extracts the control policy corresponding to the policy ID "01h" in the data received by the receive un it 31.

In addition, every time the receive unit 31 receives data, the determination unit 34 determines whether any one of the policy IDs stored by the storage unit 33 is included in the newly received data.

### (2-5) COMPARE UNIT

If the determination unit 34 determines that one of the stored policy identifiers is included in the newly received data, then the compare unit 35 compares the newly received policy ID with the policy ID of the current control policy (hereinbelow referred to as the current policy ID) stored by the storage unit 33 and determines whether they match. Let us consider an example wherein the data newly received by the receive unit 31 has a policy ID "02h" in the policy code, and the determination unit 34 specifies such. The compare unit 35 extracts the current policy ID "01h" from within the policy information stored by the storage unit 33. Then, the compare unit 35 compares the newly received policy ID "02h" and the current policy ID "01h." The compare unit 35 determines that "01h" and "02h" do not match, and sends the determination result to the control unit 36 and the storage unit 33. At this time, the storage unit 33 updates the current policy ID from "01h" to "02h" based on the determination result from the compare unit 35. For example, the storage unit 33 modifies the position of the flag.

### (2-6) CONTROL UNIT

The control unit 36 controls its own terminal based on the control policy associated with the policy ID received by the receive unit 31. For example, if the received policy ID is "01h," then the control unit 36 turns off the power of its own terminal. If the received policy ID is "02h," then the control unit 36 turns on the power of its own terminal. If the received policy ID is "03h," then the control unit 36 sets its own terminal to a state that rejects inbound calls. If the received policy ID is "04h," then the control unit 36 sets its own terminal to a state that allows inbound calls.

In addition, every time the current control policy is updated, the control unit 36 control s its own terminal based on the current control policy after the update. For example, if the current policy ID changes from "01h" to "02h", then the control unit 36 extracts from the policy information of the storage unit 33 the control policy indicated by the new policy ID "02h". Then, the control unit 36 controls its own terminal in accordance with the control policy " turn power on" indicated by the policy ID "02h." Thereby, the mobile terminal 3a can always follow the latest policy.

Furthermore, if the determination unit 34 determines that none of the policy IDs in the storage unit 33 is included in the received data, and if the compare unit 35 determines that the received policy ID and the current policy ID match, then the control unit 36 continues con trol according to the current control policy.

### (2-7) COMMUNICATION UNIT

The communication unit 37 communicates with other communication terminals. The communication unit 37 is, for example, a telephone, a software application, an e-mail program, or a Web browser. In addition, "other communication terminals" include mobile telephones, PDAs, fixed telephones, faxes, PCs, and the like. Thus, it is acceptable as long as the other communication terminals are equipment that can communicate with the mobile terminal 3a.

### (3) PRESCRIBED EVENTS

The following explains the types of events that occur at the mobile terminal 3a for which the send unit 32 thereof will send a request to send the policy code. The four examples below are cited as "prescribed events" in the mobile terminal 3a.

### (3-1) IF THE SEND UNIT 32 INTERRUPTS COMMUNICATION IN THE COMMUNICATION UNIT 37

The communication unit 37 in this case corresponds to, for example, a telephone or an Internet browser. "Interrupt communication" means that, in a state wherein a connection for communication is already established, that communication is interrupted.

The following explains a case wherein, for example, the communication unit 37 is a telephone application. Let's assume that there is an inbound call from a nother communication terminal to the mobile terminal 3a. At this point in time, a connection is established between the mobile terminal 3a and the other communication terminal. However, before the communication unit 37 performs the operation of sounding an inbound call tone and the like, and informing the user of the inbound call from the other communication terminal, the send unit 32 interrupts the communication of the communication unit 37, and sends a request to the RFID tags 5a, b to send the policy code. Then, when the receive unit 31 receives data from the RFID tags 5a, b, the determination unit 34 specifies the policy ID from within this data, and the control unit 36 controls its own terminal in accordance with this policy ID. For example, let's assume that the control policy indicated by the policy ID in the data is "turn power off." In so doing, the control unit 36 turns the power of its own terminal off. Accordingly, the connection between the mobile terminal 3a and the other communication terminal is cut.

In addition, the following explains a case wherein the communication unit 37 is an Internet browser. Let's assume that the communication unit 37 of the mobile terminal 3a accesses, for example, the Web site possessed by a PC. At this point in tim e, a connection is established between the mobile terminal 3a and the PC. If the communication unit 37 attempts to further access the Web site of a new Web page, the send unit 32 interrupts this and sends a request to the RFID tags 5a, b to send the policy code. Namely, before the communication unit 37 accesses the Web site of the new Web page, the send unit 32 interrupts the communication of the communication unit 37 and sends a request to the RFID tags 5a, b to send the policy code.

Thus, the timing by which the mobile terminal 3a interrupts the communication with the other communication terminal differs for each mobile terminal 3a. Consequently, if there is a plurality of mobile terminals in an area for which the control policy is unified, then it reduc es the probability that they will all simultaneously send policy code send requests to the RFID tags 5a, b. Namely, the timing by which the mobile terminal 3 a sends the request to the RFID tags 5a, b to send the policy code varies. Accordingly, it is possible to avoid a collision among policy code send requests.

### (3-2) IF THE SEND UNIT 32 DETECTS THE END OF COMMUNICATION IN THE COMMUNICATION UNIT 37

The communication unit 37 in this case corresponds to, for example, an e-mail program. "End of communication" means that, in a state wherein a connection for communication is already established, the end of that communication is detected.

For example, if the communication unit 37 of the mobile terminal 3a receives an e-mail, then the send unit 32 of the mobile terminal 3 detects that the communication unit 37 has received an e-mail and sends a request to the RFID tags 5a, b to send the policy code.

The timing by which such an e -mail is received differs for each mobile terminal 3a. Consequently, if there is a plurality of mobile terminals 3a in an area wherein the control policy is unified, then it reduces the probability that they will all simultaneously send policy code send requests to the RFID tags 5a, b. Namely, the timing by which the mobile terminals 3 a send the requests to the RFID tags 5a, b to send the policy code varies. Accordingly, it is possible to avoid a collision among policy code send requests.

### (3-3) IF AN INSTRUCTION FROM THE USER IS DETECTED

Let's assume that the mobile terminal 3a is pr ovided with, for example, a call send button, an e-mail send button, and a shutter button of a camera function. An "instruction from the user" corresponds to a case wherein the user has pressed one of these buttons. The mobile terminal 3a comprises a first detection unit (not shown) that detects the depressing of a button by the user. If the first detection unit detects the depressing of a button by the user, then the send unit 32 interrupts the start of the operation of the function corresponding to every button, and sends a request to the RFID tags 5a, b to send the policy code. For example, let's consider a case wherein the mobile terminal 3a has already started the TV function. When the user depresses the button to increase the volume of the TV function, the send unit 32 interrupts the operation to increase the volume ofthe TV function and sends a request to the RFID tags 5a, b to send the policy code. If the control policy indicated by the policy ID in the data of the RFID tags 5a, b is " set to mute," then the mobile terminal 3a controls its own terminal by setting it to a state wherein sound is not outputted, even if the volume button is pressed.

Thus, the timing by which the users of the mobile terminals 3a press the various buttons differs for each mobile terminal 3a. This consequently reduces the probability that the mobile terminals 3a will all simultaneously send a request to the RFID tags 5a, b to send the policy code. Accordingly, it is possible to avoid collisions among policy code send request s.

### (3-4) IF STARTUP OF AN APPLICATION IN THE MOBILE TERMINAL 3A IS DETECTED

The storage unit 33 of the mobile terminal 3a further stores applications, such as the camera function, the TV function, a music function, the Internet function, and the like. The mobile terminal 3a comprises a second detection unit (not shown) that detects whether the user has selected and started up an application, for example, by a menu screen. If the second detection unit detects the startup of an application, the send unit 3 2 sends a request to the RFID tags 5a, b to send the policy code. Let us consider an example wherein the mobile terminal 3a has a music application. If the mobile terminal 3a starts up the music application, the second detection unit detects this and the s end unit 32 sends a request to the RFID tags 5a, b to send the policy code. Let's assume that the control policy indicated by the policy ID in the data of the RFID tags 5a, b is "turn off music playback." In this case, the mobile terminal 3a controls its own terminal by setting it to a state wherein music cannot be played.

Thus, the timing at which the users of the mobile terminals 3a start up applications differs for each mobile terminal. This consequently reduces the probability that the mobile terminal s 3a will all simultaneously send a request to the RFID tags 5a, b to send the policy code. Accordingly, it is possible to avoid a collision among policy code send requests.

Furthermore, the present invention is not limited to the four events explained a bove. Namely, with the present invention, it is acceptable as long as the send unit 32 sends, at an arbitrary timing generated by a prescribed event of its own terminal, the request to the RFID tags 5a, b to send the policy code.

### (4) SEQUENCE OF OPERATION AL FLOW

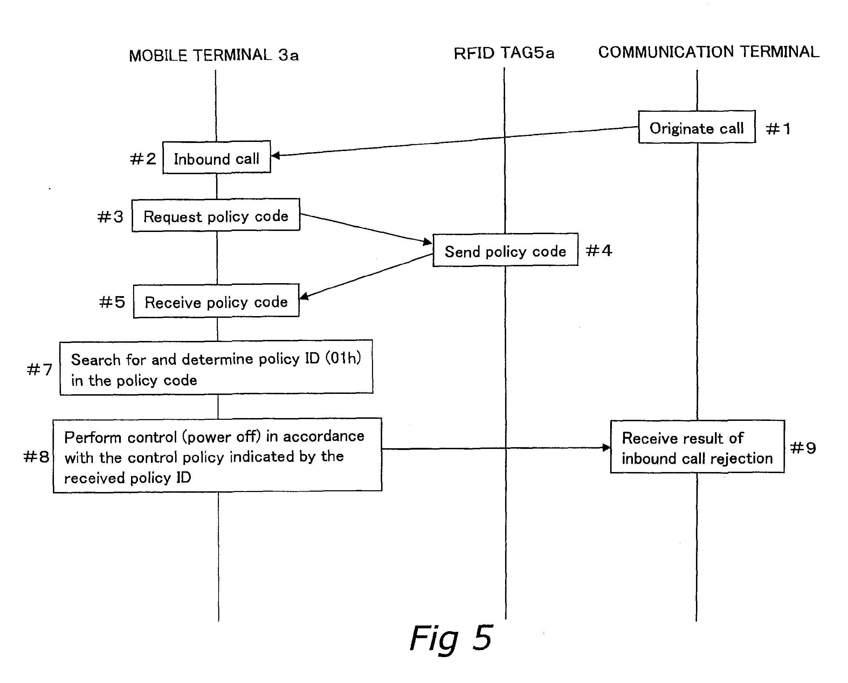

The following explains the series of operations of the control policy specification system that uses the mobile terminal according to the first embodiment of the present invention. FIG. 5 is an operational flow chart of the control policy specification system 1 that uses the mobile terminal 3a according to the first embodiment. The following considers as an example a case wherein a user of a mobile terminal 3 has boarded the train 2 in which the mobile terminals therein are prompted to turn their power off. Furthermore, let's assume that when a user of the mobile terminal 3a boards the train 2, the mobile terminal 3a is in a state wherein its power is on.

First, let's assume that the user of the mobile terminal 3a has boarded the train 2 wherein a poster 4, to which the RFID tag 5a is affixed, is posted in the train 2.

When a communication terminal, which is located outside of the train 2, calls the mobile terminal 3a (#1), the communication unit 37 of the mobile terminal 3a detects the inbound call (#2). In so doing, the send unit 32 of the mobile terminal 3a interrupts the process wherein the communication unit 37 informs the user of the inbound call, and sends a request to the RFID tag 5a, which is inside the train 2, to send the policy code (#3). The RFID tag 5a, which receives the request to send the policy code from the mobile terminal 3a, sends the policy code (#4). At this time, let's assume that the policy code includes the policy ID "01h" that identifies the control policy inside the tr ain 2. The receive unit 31 of the mobile terminal 3a receives this policy code (#5).

The determination unit 34 of the mobile terminal 3a searches the policy IDs in the policy information stored by the storage unit 33 to see whether there is one that matches the policy ID in the policy code received by the receive unit 31 (#7). The policy ID "01h" in the received policy code matches the policy ID "01h" in the policy information of the storage unit 33. Accordingly, the determination unit 34 of the mobile terminal 3a extracts from the policy information of the storage unit 33 the control policy "turn power off' indicated by the policy ID "01h", and send to the control unit 36 .

Based on the control policy "turn power off" extracted from [the policy information] in the storage unit 33, the control unit 36 of the mobile terminal 3a turns the power of its own terminal off (#8). In so doing, the mobile terminal 3a also turns the power of the communication unit 37 off, and consequently the connection between the mo bile terminal 3a and the communication terminal is cut. The communication terminal receives from the base station to the effect that the mobile terminal 3a is in a state wherein calls are not possibly (#9).

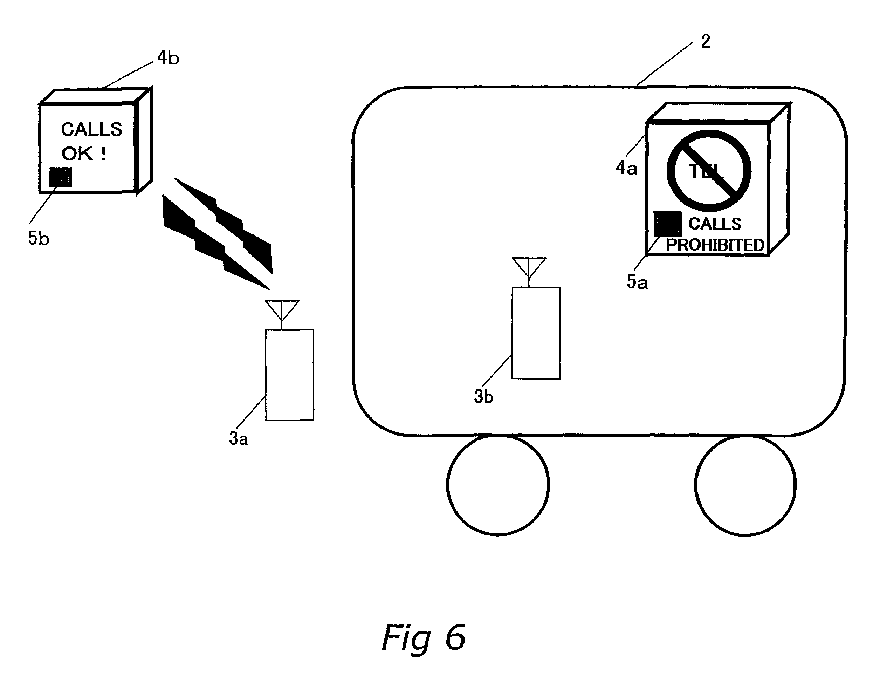

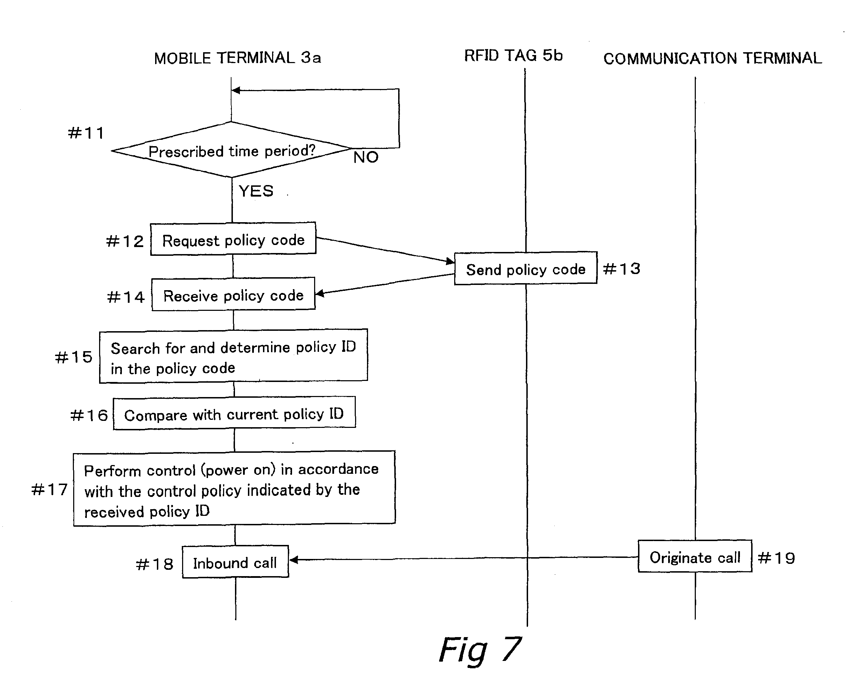

FIG. 7 will be used to give a detailed explanat ion for the case wherein a user of the mobile terminal 3a, for which the power is turned off, subsequently disembarks from the train 2, as depicted in FIG. 6. FIG. 6 is a schematic diagram of the control policy specification system 1 according to the first embodiment of the present invention, and depicts a case wherein the mobile terminal 3a has moved outside of the train 2. FIG. 7 is an operational flow chart of the control policy specification system 1 depicted in FIG. 6.

Let's assume that a user of the mobile terminal 3a disembarks from the train 2 and moves to an area where the RFID tag 5b in poster 4b is installed. Because the power of the mobile terminal 3a is turned off, it is in a state wherein it cannot communicate. Accordingly, in order to make it so that the policy code can always be received when the power is turned off, the mobile terminal 3 uses a separate power supply to turn on just the functions of the request to send the policy code and a RFID tag reader that receives the policy code. In addition, let's assume that calling is enabled in the area where the RFID tag 5b is installed, and that the RFID tag 5b has a policy code that includes the policy ID "02h", which indicates the control policy "turn power on."

Every time a prescribed time period elapses (#11), the send unit 32 of the mobile terminal 3a sends a request to the RFID tag 5b to send the policy code (#12). The RFID tag 5b, which receives the request to send the policy code from the mobile terminal 3a, sends to the mobile terminal 3a a policy code that includes the policy ID "02h", which identifies the control policy "turn power on" (#13). The receive unit 31 of the mobile terminal 3a receives this policy code (#14).

The determination unit 34 of the mobile terminal 3a searches the policy IDs in the policy information stored by the storage unit 33 to see if one matches the policy ID in the policy code received by the receive unit 31 (#15). The received policy code has the policy ID "02h," which matches the policy ID "02h" in the po licy information of the storage unit 33. Accordingly, the determination unit 34 of the mobile terminal 3a extracts the control policy "turn power on" indicated by the policy ID "02h" in the policy information of the storage unit 33, and sends such to the compare unit 3 5.

The compare unit 35 of the mobile terminal 3a compares the extracted policy ID with the current policy ID stored by the storage unit 33 (#16). At this time, because the mobile terminal 3a is in a state wherein its power is turned off, the current policy ID is "01h." Accordingly, the compare unit 35 determines that the extracted policy ID "02h" is different from the current policy ID "01h." The compare unit 35 sends the comparison result to the storage unit 33 and the control unit 36. Based on the comparison result, the storage unit 33 modifies the position of the flag that indicates the current policy ID from the current policy ID "01h" to "02h."

Based on the control policy "turn power on" corresponding to the policy ID "02h", the control unit 36 of the mobile terminal 3a turns the power of its own terminal on (#17). Accordingly, a connection is established between the mobile terminal 3a and the communication terminal. Thereby, calling between the mobile terminal 3a and the communication terminal is enabled (#18, 19).

Furthermore, as discussed above, the policy ID that identifies the control policies " turn power off" and "turn power on" are stored in the RFID tags 5a, b, respectively, but the present invention is not limited thereto. For example, the RFID tags 5a, b may store the policy IDs that identify the control policies "set to etiquette mode" and "set to silent mode," respectively. In this case, the storage unit 33 of the mobile terminal 3a stores the policy IDs corresponding to the control policies "set to etiquette mode" and "set to silent mode." Thereby, by setting the etiquette mode, the silent mode, and the like, the mobile terminal 3a does not sound the inbound call tone inside the train 2.

### (5) EFFECTS

The mobile terminals 3a, b each control its own terminal in accordance with the control policy decided for the prescribed area. Accordingly, the users of the mobile terminals 3a, b can follow the control policy decided for the prescribed area without violating the established social order. In addition, the mobile terminals 3a, b each send, at an arbitrary timing generated by a prescribed event at its own terminal, a request to the RFID tags 5a, b to send the policy code that includes the policy ID. The timing at which the prescri bed event is generated at its own terminal differs for each mobile terminal. This consequently reduces the probability that the mobile terminals 3a, b will simultaneously receive policy codes that include the policy IDs of the RFID tags 5a, b. Namely, the timing at which the mobile terminals 3a, b each send a request to the RFID tags 5a, b to send the policy code varies. Accordingly, it is possible to avoid collisions among policy code send requests.

Furthermore, if the mobile terminal 3a of the present embodiment is located in an area where there is no RFID tag, the following operation, for example, is performed. In an area in which an RFID tag is not installed, the receive unit 31 cannot acquire the policy code, even if the send unit 32 of the mobile terminal 3a sends a request to send the policy code that includes the policy ID. Therefore, the receive unit 31 of the mobile terminal 3a stands by for a prescribed time period after sending a policy code send request. If the receive unit 31 does not receive the policy code within the prescribed time period, then it determines that there is no RFID tag in the vicinity of its own terminal. Furthermore, the storage unit 33 of the mobile terminal 3a deletes the flag that indicates the current control policy and the current policy ID, and the control unit 36 controls its own terminal by setting it to a state that accepts instructions from the user. Thereby, based on an instruction from the user, the mobile terminal 3a controls its own terminal, for example, to turn the power on.

### <SECOND EMBODIMENT>

### (1) CONSTITUTION OF SYSTEM

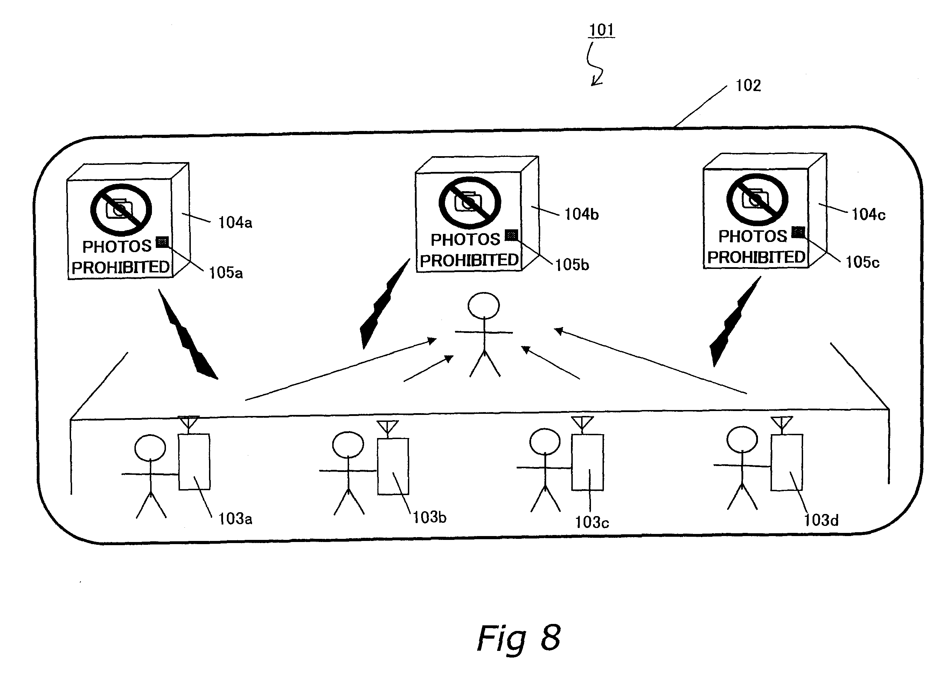

FIG. 8 is a block diagram of the control policy specification system according to the second embodiment of the present invention. The second embodiment takes as an example a system that enforces a prohibition on photo taking upon mobile terminals 103a - d, which are equipped with a camera function, in a concert hall 102. A control policy specification system 101 in FIG. 8 comprises posters 104a - c and RFID tags 105a - c inside the concert hall 102. The posters 104a - c post the control policy for enforcing etiquette inside the concert hall 102 upon the mobile terminals 103a - d in the concert hall 102, and the RFID tags 105a - c are affixed to the posters 104a - c, respectively. The etiquette rule "no photo taking" in the concert hall 102 is posted on the posters 104a - c. The RFID tags 105a - c each store the policy code that includes the policy ID "05h" and the like for specifying the control policy "turn camera function off" inside the concert hall 102. The RFID tags 105a - c send the policy code to each of the mobile terminals 103a - d. Furthermore, the present embodiment takes as an example a case wherein each of the RFID tags 105a - c is an active tag equipped with an internal power suppl y and autonomously sends the policy code. Here, the types of policy code information stored by the RFID tags 105a - c are the same as that in FIG. 2 of the first embodiment, and the explanation thereof is therefore omitted.

If the mobile terminals 103a - d receive a policy code from the RFID tags 105a - c, then they specify the control policy inside the concert hall 102 based thereon, and each controls its own terminal based on the specified control policy.

Furthermore, with the present embodiment, the RFID tags 105a - c are affixed to the posters 104a - c, but the present invention is not limited thereto. The RFID tags 105a - c may be installed anywhere as long as the location is one where the policy ID corresponding to the control policy inside the con cert hall 102 can be sent to the mobile terminals 103a - d inside the concert hall 102.

### (2) FUNCTIONS

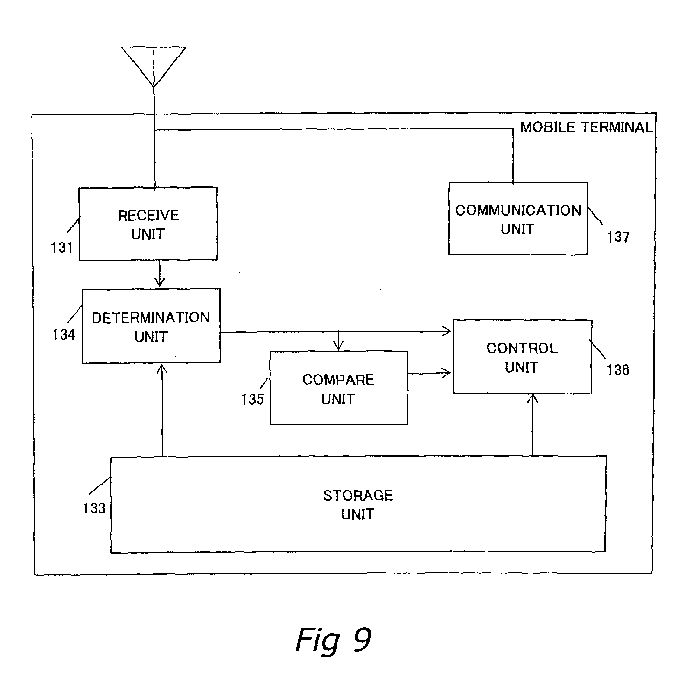

The following explains the functions of the mobile terminals 103a - d according to the second embodiment of the present invention. Herein, the mobile terminals 103a - d all have the same functional constitution, and therefore the following explains only the mobile terminal 103a. FIG. 9 is a functional block diagram of the mobile terminal 103a according to the second embodiment of the present invention. The mobile terminal 103a according to the present embodiment has a functional constitution that does not include the send unit among the functions of the mobile terminal 3a according to the first embodiment. Namely, the mobile terminals 103a - d according to the second embodiment of the present invention each comprise a receive unit 131, a storage unit 133, a determination unit 134, a compare unit 135, a control unit 136, and a communication unit 137.

The receive unit 131 receives data, which includes the policy code, from the RFID tags 105a - c.

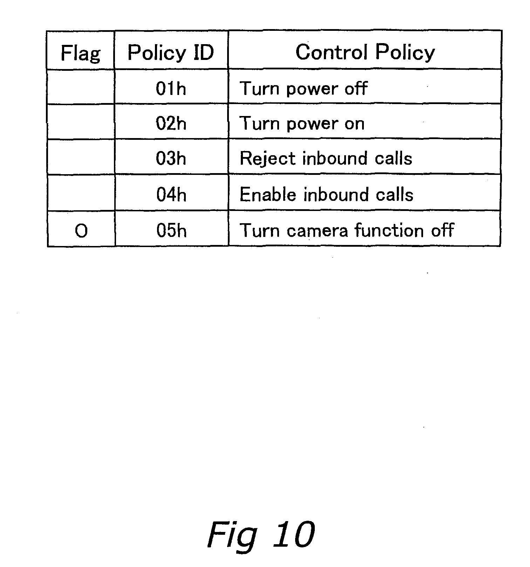

The storage unit 133 stores the policy information. The policy information stores, as one record, the control policy that controls the mobile terminal and the policy ID that identifies the applicable control policy. FIG. 10 is a conceptual diagram of the policy information stored by the storage unit 133. In addition to the policy information stored by the storage unit 33 of the first embodiment, the storage unit 133 in FIG. 10 further stores the association between the policy ID "05h" and the control policy "turn camera function off." In addition, the storage unit 133 discriminably stores the current control policy. For example, as depicted in FIG. 10, the storage unit 133 further stores a flag for identifying the current control policy. The flag indicates which of the policy information records is the current control policy. The position of the flag changes attendant with the modifications to the current control policy.

The determination unit 134 determines wheth er any one of the policy identifiers stored by the storage unit 133 is included in the data received from the RFID tags 105a, b. In addition, every time the receive unit 131 receives data, the determination unit 134 determines whether any one of the policy IDs stored by the storage unit 133 is included in the received data. Furthermore, the determination unit 134 sends the determination result to the compare unit 135 and the control unit 136.

If the determination unit 134 determines that none of the store d policy identifiers is included in the newly received data, then the compare unit 135 compares the newly received policy ID with the current policy ID stored by the storage unit 133 and determines whether they match. Then, the compare unit 135 sends the comparison result to the control unit 136 and the storage unit 133. For example, if the comparison result is that there is no match, then the storage unit 133 modifies the position of the flag that indicates the current policy ID.

The control unit 136 con trols its own terminal based on the policy ID received by the receive unit 131. In addition, every time the control policy indicated by the current policy ID is modified, the control unit 136 controls its own terminal based on the updated current control policy.

The communication unit 137 communicates with other communication terminals.

### (3) SEQUENCE OF OPERATIONAL FLOW

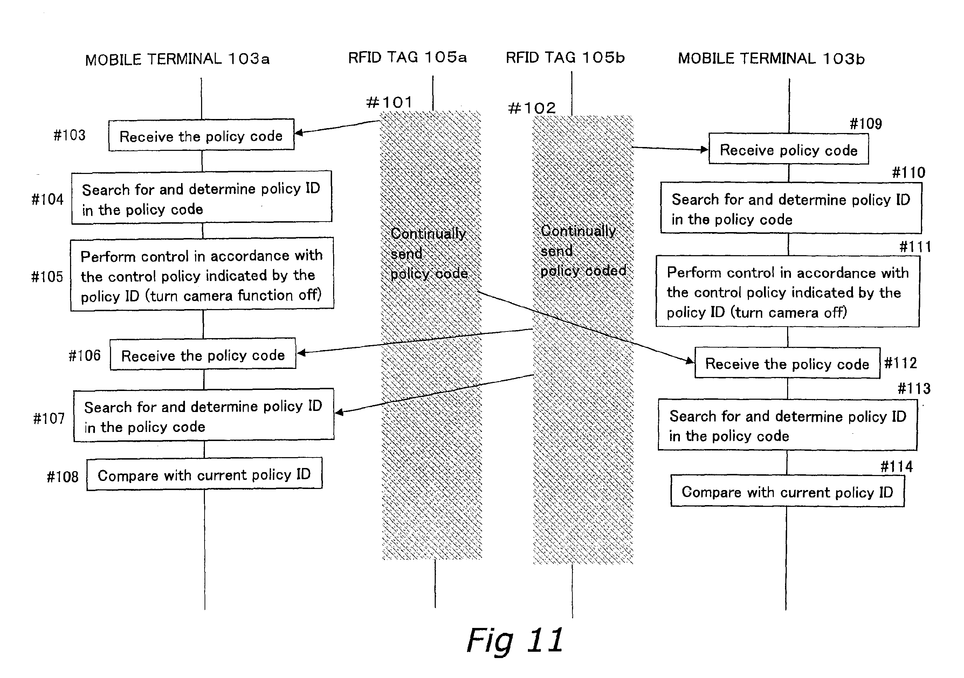

The following explains the sequence of operations of the control policy specification system that uses mobile terminals 103a - d according to the second embodiment of the present invention. FIG. 11 is an operational flow chart of the control policy specification system that uses mobile terminals 103a, b according to the second embodiment. To facilitate the explanation, the following explains the operation of the mobile terminals 103a, b among the mobile terminals 103a - d, and the RFID tags 105a, b among the RFID tags 105a - c. To start with, let us assume that the mobile terminals 103a, b of two users are each in a state wherein the power is turned off.

First, the user of the mobile terminal 103a enters the concert hall 102, wherein posters 104a, b with the RFID tags 105a, b affixed thereto are posted in the hall. Furthermore, let us assume that the RFID tags 105a, b, which are active ta gs, in the concert hall 102 are continually sending a policy code that includes a policy ID "05h" that identifies the control policy "turn camera function off" (#101, 102).

The receive unit 131 of the mobile terminal 103a receives the policy code that is continually sent by the RFID tag 105a (#103).

The determination unit 134 of the mobile terminal 103a determines whether the policy ID in the policy code received by the receive unit 131 matches any one of the policy IDs in the policy information stored by the storage unit 133 (#104). The policy ID "05h" in the received policy code matches the policy ID "05h" in the policy information of the storage unit 133. Accordingly, the determination unit 134 of the mobile terminal 103a extracts, from the policy information of the storage unit 133, the control policy "turn camera function off" indicated by the policy ID "05h," and sends such to the control unit 136.

Based on the control policy "turn camera function off" extracted from the policy information of the storage unit 133, the control unit 136 of the mobile terminal 103a turns off the camera function (#105). "Turn camera function off" means that the control unit 136 of the mobile terminal 103a controls its own terminal so that the camera function application is not started even if, for example, the user presses a button in order to start the camera function application. In addition, in the case of a mobile terminal 103 a wherein the camera function is already started, the control unit 136 may close the camera function application. In addition, in the case of a mobile terminal 103a wherein the camera function is already started, the control unit 136 may control its own terminal so that a photo cannot be taken even if the user presses the camera's shutter button.

Next, let's assume that the receive unit 131 of the mobile terminal 103a has received a policy code, which is continually being sent by the RFID tag 105b (#106).

The determination unit 134 of the mobile terminal 103a determines whether the policy ID in the policy code received by the receive unit 131 matches any one of the policy IDs in the policy information stored by the storage unit 133 (#107). The policy ID "05h" in the received policy code matches the policy ID "05h" in the policy information of the storage unit 133. Accordingly, the determination unit 134 of the mobile terminal 103a extracts, from the policy information of the storage unit 133, the policy ID "05h" and the applicable control policy "turn camera function off," and sends such to the compare unit 13 5.

The compare unit 135 of the mobile terminal 103a compares the current policy ID stored by the storage unit 133 with the extracted policy ID "05h" (#108). At this time, because the mobile terminal 103a is in a state wherein the camera function is turned off, the current policy ID is "05h." Accordingly, the compare unit 135 determines that the extracted policy ID "05h" and the current policy ID "05h" are identical. The compare unit 135 sends a comparison result to the effect that the control policy IDs are identical to the control unit 136. When the control unit 136 receives the comparison result, it maintains the state of the mobile terminal 103a.

Next, let us assume that the user of the mobile terminal 103b enters the concert hall 102, wherein the posters 104a, b with the RFID tags 105a, b affixed thereto are posted in the hall.

The receive unit 131 of the mobile terminal 103b receives the policy code, which is continually sent by the RFID tag 105 b (#109).

The determination unit 134 of the mobile terminal 103b determines whether the policy ID in the policy code received by the receive unit 131 matches any one of the policy IDs in the policy information stored by the storage unit 133 (#110). The policy ID "05h" in the received policy code matches the policy ID "05h" in the policy information of the storage unit 133. Accordingly, the determination unit 134 of the mobile terminal 103b extracts, from the policy information of the storage unit 133, the control policy "turn camera function off' indicated by the policy ID "05h," and sends such to the control unit 136.

Based on the control policy "turn camera function off" extracted from the policy information of the storage unit 133, the control unit 136 of the mobile terminal 103b turns th e camera function off (#111). "Turn camera function off" means that the control unit 136 of the mobile terminal 103b controls its own terminal so that the camera function application is not started up, even if, for example, the user presses a button in ord er to start the camera function application. In addition, in the case of a mobile terminal 103b wherein the camera function is already started, the control unit 136 may close the camera function application. In addition, in the case of a mobile terminal 10 3b wherein the camera function is already started, the control unit 136 may control its own terminal so that a photo cannot be taken even if the user presses the camera's shutter button.

Next, let's assume that the receive unit 131 of the mobile terminal 103b has received the policy code, which is continually sent by the RFID tags 105a (#112).

The determination unit 134 of the mobile terminal 103b determines whether the policy ID in the policy code received by the receive unit 131 matches any one of the policy IDs in the policy information stored by the storage unit 133 (#113). The policy ID "05h" in the received policy code matches the policy ID "05h" in the policy information of the storage unit 133. Accordingly, the determination unit 134 of the mobil e terminal 103b extracts, from the policy information of the storage unit 133, the policy ID "05h" and the applicable control policy "turn camera function off," and sends such to the compare unit 13 5.

The compare unit 135 of the mobile terminal 103b comp ares the current policy ID stored by the storage unit 133 with the extracted policy ID "05h" (#114). At this time, because the mobile terminal 103b is in a state wherein the camera function is turned off, the current policy ID is "05h." Accordingly, the compare unit 135 determines that the extracted policy ID "05h" and the current policy ID "05h" are identical. The compare unit 135 sends the comparison result to the effect that the control policy IDs are identical to the control unit 136. When the control unit 136 receives the comparison result, it maintains the state of the mobile terminal 103b.

### (4) EFFECTS

The control policy specification system according to the present embodiment can also be adapted to a case wherein the RFID tags 105a - c are active tags. Furthermore, the control policy specification system according to the present embodiment can also be adapted to a plurality of RFID tags 105a - c and a plurality of mobile terminals 103a - d. The mobile terminals 103a - d according to the present embodiment each controls its own terminal in accordance with the control policy decided for the specified area. Accordingly, the users of the mobile terminals 103a - d can follow the control policy decided for the specified area without violating the established social order.

### <THIRD EMBODIMENT>

### (1) CONSTITUTION OF SYSTEM

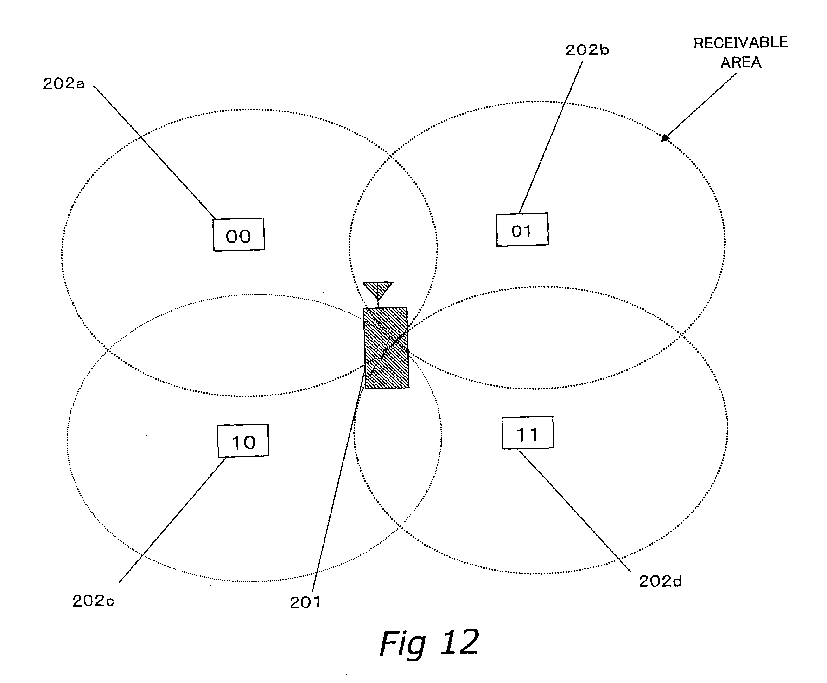

FIG. 12 is a block diagram of the control policy specification system according to the third embodiment. In the third embodiment, a plurality RFID tags 202a - d are disposed as depicted in FIG. 12, taking into consideration the tag data receivable areas. A mobile terminal 201 is located at a point wherein the receivable areas of a plurality of RFID tags 202a - d overlap. Here, a receivable area means an area where the data sent by the RFID tags 202a - d can be received by the mobile terminal 201. Accordingly, the mobile terminal 201 can receive data from all of the RFID tags 202a - d. In addition, to facilitate the explanation, let us take as an example a case wherein there is one mobile term inal located at a point wherein the receivable areas of the plurality of the RFID tags 202a - d overlap.

Furthermore, the present embodiment assumes a case wherein the RFID tags 202a - d are passive tags that convert a received carrier wave to electric power and send a policy ID, the same as the first embodiment.

### (2) MOBILE TERMINAL

The following explains the functions of the mobile terminal 201 according to the third embodiment of the present invention. The functional constitution of the mobile terminal 201 according to the third embodiment is similar to the mobile terminal 3a according to the first embodiment. Namely, the mobile terminal 201 comprises a receive unit, a send unit, a storage unit, a determination unit, a compare unit, a control unit, an d a communication unit.

The receive unit receives data, which includes the policy code, from the RFID tags 202a - d.

The send unit sends a request to the RFID tags 202a - d to send, at an arbitrary timing generated by a prescribed event at its own term inal, the policy code, which includes the policy ID. Furthermore, the send unit sends a carrier wave, which supplies electric power to the RFID tags 202a - d. Furthermore, with the present embodiment, the send unit sends a policy code send request, and continues to send the carrier wave for an arbitrary time period.

The storage unit stores the policy information. The policy information stores, as one record, the control policy that controls the mobile terminal 201 and the policy ID that identifies the applicable control policy. In addition, the storage unit discriminably stores the current control policy. A flag indicates which of the policy information records is the current control policy. The present embodiment uses, for example, a flag as the method of discriminating the current control policy. The position of the flag changes attendant with modifications to the current control policy.

The determination unit determines whether any one of the policy identifiers stored by the storage unit is included in the data received from the RFID tags 202a - d. In addition, every time the receive unit receives data, the determination unit determines whether any one of the policy IDs stored by the storage unit is included in the newly received data. Furthermore, the determination unit sends the determination result to the compare unit and the control unit.

If the determination unit determines that any one of the stored policy identifiers is included in the newly received data, then the compare unit compares the newly received policy ID with the current policy ID stored by the storage unit, and determines whether they match. Furthermore, the compare unit sends the comparison result to the control unit and the storage unit. For example, if the comparison result is that there is no match, then the storage unit modifies the position of the flag that indicates the current policy ID.

The control unit controls its own terminal based on the policy ID received by the receive unit. In addition, every time the control policy indicated by the current policy ID is modified, the control unit controls its own terminal based on the updated current control policy.

The communication unit communicates with other communication terminals.

### (3) RFID TAGS

Each of the RFID tags 202a - d stores a policy code. The types of information in each policy code is similar to that in FIG. 2 of the first embodiment. Namely, each policy code includes a policy ID, the applicable equipment code, and a sequence number. The policy ID identifies the control policy within the area where the RFID tags 202a - d are located. The applicable equipment code indicates the equipment that is subject to the enforcement of the control policy. The sequence number is unique information for identifying each of the RFID tags 202a - d. Hereinbelow, the sequence numbers of the RFID tags 202a - d are "00," "01," "10," and "11," respectively.

Each of the RFID tags 202a - d comprises a generation unit that generates time slots wherein the policy code is sent based on the res pective sequence number. Furthermore, each of the RFID tags 202a - d comprises a send unit that uses the time slots generated by the generation unit to sequentially and time divisionally send the policy code. Namely, each of the RFID tags 202a - d sets, based on the sequence number, the standby time from when the policy code send request is received until the policy code is sent. For example, the RFID tag 202a sets, based on the sequence number "00", the standby time, from when the policy code send request is received until sending the policy code, to "0" slots. The RFID tag 202b sets, based on the sequence number "01", the standby time, from when the policy code send request is received until the policy code is sent, to "1" slot. The RFID tag 202c sets, bas ed on the sequence number "10", the standby time, from when the policy code send request is received until the policy code is sent, to "2" slots. The RFID tag 202d sets, based on the sequence number "11", the standby time, from when the policy code send re quest is received until the policy code is sent, to "3" slots. In other words, each of the RFID tags 202a - d sets its send interval so that it does not overlap the interval during which another RFID tag is sending its policy code.

### (3) OPERATIONAL FLOW

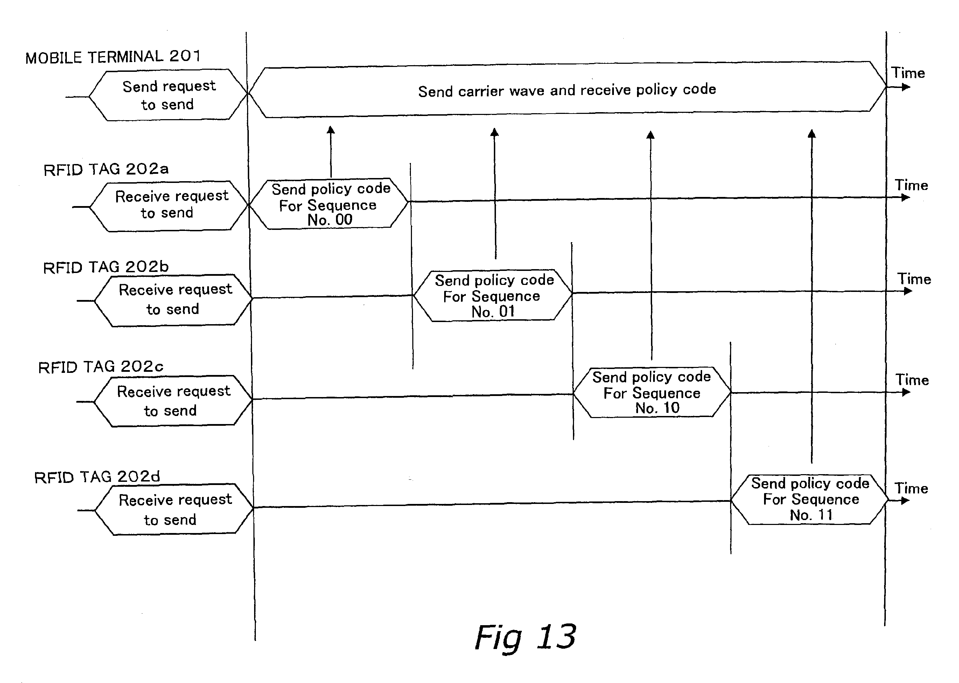

The following explains the operation wherein the mobile terminal 201, which was discussed above, receives the policy code from a plurality of RFID tags 202a - d. FIG. 13 is a timing chart that depicts the operation of sending and receiving between the mobi le terminal 201 and the plurality of RFID tags 202a - d according to the third embodiment.

First, the mobile terminal 201 sends a policy code send request, and continues to send the carrier wave. When the RFID tag 202a receives the request to send the po licy code from the mobile terminal 201, it sends the policy code without standing by. When the RFID tag 202b receives the request to send the policy code from the mobile terminal 201, it sends the policy code after standing by for one slot. When the RFID tag 202c receives the request to send the policy code from the mobile terminal 201, it sends the policy code after standing by for two slots. When the RFID tag 202d receives the request to send the policy code from the mobile terminal 201, it sends the policy code after standing by for three slots. The mobile terminal 201 consecutively receives each of the policy codes of the RFID tags 202a - d.

Next, the mobile terminal 201 searches for and compares the policy ID in each of the received policy codes, and controls its own terminal in accordance with the control policy corresponding to each policy ID.

### (4) EFFECTS

According to the method discussed above, the RFID tags 202a - d sequentially send the policy codes, and the mobile terminal 201 receives such. Thereby, the RFID tags 202a - d can avoid collisions among the policy codes to be sent.

In addition, the present embodiment discussed a case wherein there is one mobile terminal, but a plurality of mobile terminals may be located in the areas where reception of data from the RFID tags 202a - d is possible.

The present embodiment assumes that the RFID tags 202a - d are passive tags, but the present embodiment can also be adapted to active tags. In this case, the mobile terminal 20 1 can do without the send unit that sends the send request and the carrier wave. Furthermore, the RFID tags 202a - d, which are active tags, are connected via a communication interface for communicating with each of the RFID tags 202a - d. The RFID tags 202a - d jointly determine, via the communication interface, the timing at which they will each send the policy code, and, based on that determined timing, generate slots for sending the policy code. In other words, the RFID tags 202a - d continually and time divisionally send their policy code in the generated slots.

In addition, the RFID tags 202a - d according to the present embodiment can also be adapted to semi-passive tags. A semi -passive tag has a built-in power supply. When each of the RFID tags 202a - d, which are semi -passive tags, receives a send request from the mobile terminal 201, it time divisionally sends the policy code using the built -in power supply.

In addition, if each of the RFID tags 202a - d are located in an area wherein the control policy is unified, and store a policy code that includes the identical policy ID, then the following type of system may be used. First, the mobile terminal 201 sends a policy code send request. The RFID tags 202a - d that receive the policy code send request from the mobile terminal 201 time divisionally send the policy code. When the receive unit of the mobile terminal 201 receives the policy code from at least one RFID tag among the RFID tags 202a - d, the determination unit stops the send unit from sending a policy code send request. In other words, when the mobile terminal 201 receives the policy code that was first sent, it does not receive policy codes that are subsequently sent. Furthermore, the send request may be the carrier wave. Thereby, the mobile terminal 201 can make do without receiving the policy code, which includes the identical policy ID, a multiple number of times from the plurality of RFID tags 202a - d. Namely, the mobile terminal 201 does not need to search for and receive the same policy code. Accordingly, it is possible to reduce the power consumption of the mobile terminal 201.

Furthermore, the system discussed above is ideally suited to a case wherein the plurality of mobile terminals are located in the same area. In this case, the time during which each of the mobile terminals receives the policy code is "one slot portion." The time during which each mobile terminal receives one policy code is shorter than the time during which all policy codes are received from the RFID tags 202a - d. This reduces the probability of a collision among the policy code send requests from the plurality of mobile terminals. Accordingly, it is possible to avoid collisions among send requests.

### <FOURTH EMBODIMENT>

### (1) CONSTITUTION OF SYSTEM

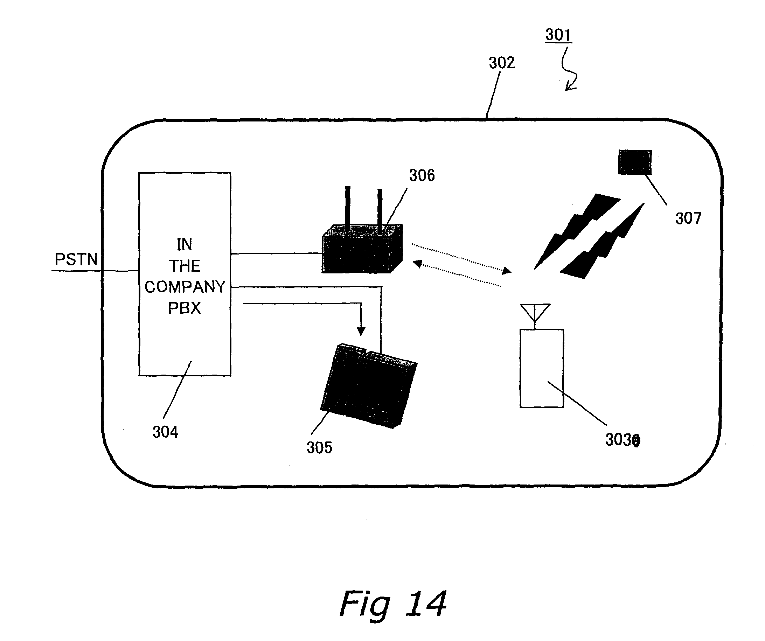

FIG. 14 is a block diagram of the control policy specification system according to the fourth embodiment. The fourth embodiment is an example of using the control policy specification system 301 of the present invention in, for example, a company mobile terminal 303 and an inside-the-company fixed telephone 305. A company interior 302 comprises a mobile terminal 303, an inside -the-company PBX (Private Branch eXchange) 30 4, the fixed telephone 305, a base station 306, and an RFID tag 307. The inside -the-company PBX 304 is a telephone exchange, located inside an enterprise, which connects inside -the-company telephone extensions and connects to public lines. The base station 306, which communicates with the fixed telephone 305 and the mobile terminal 303, is connected to the inside -the-company PBX 304. In addition, the RFID tag 307, which is a passive tag, is installed in the company interior 302. The RFID tag 307 stores the policy code, which comprises the policy ID for identifying the control policy of the company interior 302. Here, let us assume that the policy code stored by the RFID tag 307 is associated with the control policy "automatically forward inbound calls of the mobile terminal to the fixed telephone 305" and the policy ID "06h." In addition, the present embodiment assumes a case wherein the RFID tag 307 is a passive tag that converts a received carrier wave to electric power and sends a policy ID, the same as in the first embodiment.

When the mobile terminal 303 receives the policy code from the RFID tag 307, it specifies the control policy for the company interior 302 based thereon, and controls its own terminal based on the specified control policy.

### (2) MOBILE TERMINAL

The following explains the functions of the mobile terminal 303 according to the fourth embodiment of the present invention. The functional constitution of the mobile terminal 303 is similar to the mobile terminal 3 according to the first embodiment. Namely, a mobile terminal 303 comprises a receive unit, a send unit, a storage unit, a determination unit, a com pare unit, a control unit, and a communication unit.

The receive unit receives data, which includes the policy code, from the RFID tag 307.

The send unit sends a request to the RFID tag 307 to send the policy code, which includes the policy ID, at a timing generated by an inbound call to its own terminal. Furthermore, the send unit sends a carrier wave, which supplies electric power to the RFID tag 307.

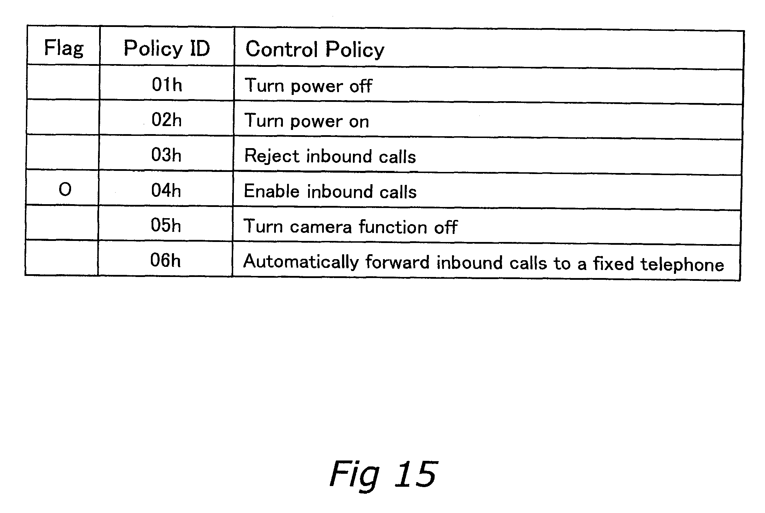

The storage unit stores the policy information. The policy information stores, as one record, the control policy that controls the mobile terminal 303 and the policy ID that identifies the applicable control policy. FIG. 15 is a conceptual diagram of the policy information according to the present embodiment. In addition to the association information s tored by the storage unit 33 in the second embodiment, the policy information in FIG. 15 further associates and stores the policy ID "06h" and the control policy "automatically forward inbound calls to the fixed telephone." In addition, the storage unit di scriminably stores the current control policy. The present embodiment uses, for example, a flag as the method of discriminating the current control policy. The flag indicates which of the policy information records is the current control policy. The position of the flag changes attendant with modifications to the current control policy.

The determination unit determines whether any one of the policy identifiers stored by the storage unit is included in the data received from the RFID tag 307. In addition, every time the receive unit receives data, the determination unit determines whether any one of the policy IDs stored by the storage unit is included in the newly received data. Furthermore, the determination unit sends the determination result to the com pare unit and the control unit.

If the determination unit determines that any one of the stored policy identifiers is included in the newly received data, then the compare unit compares the newly received policy ID with the current policy ID stored by the storage unit, and determines whether they match. Furthermore, the compare unit sends the comparison result to the control unit and the storage unit. For example, if the comparison result is that they do not match, then the storage unit modifies the position of the flag that indicates the current policy ID.

The control unit controls its own terminal based on the policy ID received by the receive unit. In addition, every time the control policy indicated by the current policy ID is modified, the control unit controls its own terminal based on the updated current control policy.

The communication unit communicates with other communication terminals.

### (3) SEQUENCE OF OPERATIONAL FLOW

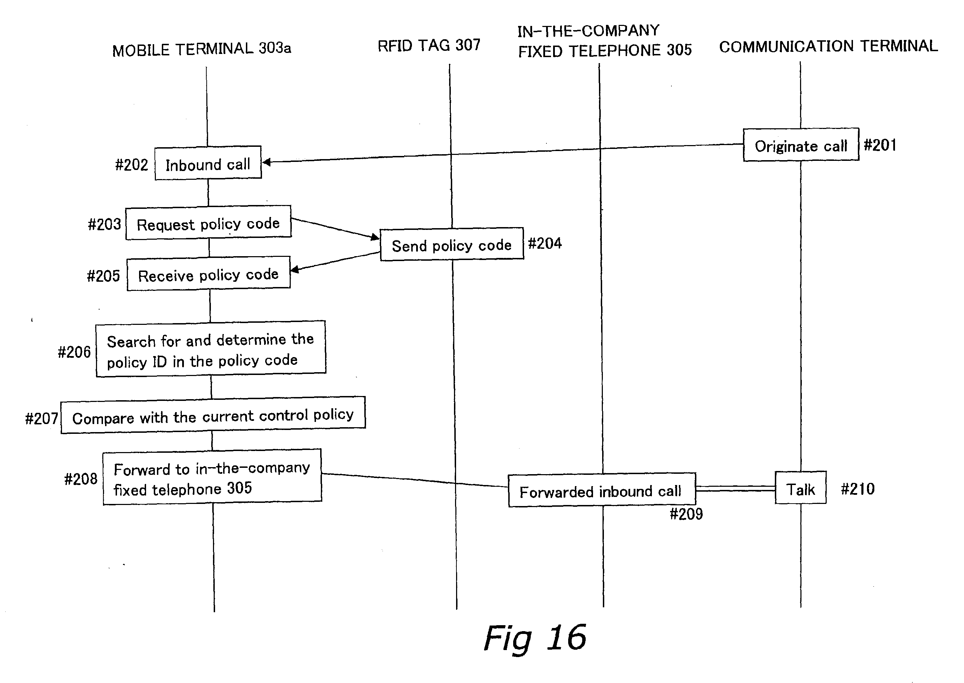

The following explains the series of operations of the control policy specification system 301 according to the fourth embodiment. FIG. 16 is an operational flow chart of the control policy specification system 301 according to the fourth embodiment. First, let us assume that the current policy ID of the mobile terminal 303 a nd the current control policy are "04h" and "set to enable inbound calls," respectively. Namely, let us assume that the current state of the mobile terminal 303 is "inbound calls enabled."

First, let us assume that the user of the mobile terminal 303 is in the company interior 302 and in the area of the RFID tag 307.

A communication terminal located outside the area of the RFID tag 307 calls the mobile terminal 303 (#201), and the communication unit of the mobile terminal 303 detects the inbound call (#202). In so doing, the send unit of the mobile terminal 303 interrupts the process of informing the user of the inbound call, and sends a policy code send request to the RFID tag 307 in the company interior 302 (#203). The RFID tag 307 that receives the po licy code send request from the mobile terminal 303 sends the policy code (#204). The receive unit of the mobile terminal 303 receives the policy code (#205).

The determination unit of the mobile terminal 303 determines whether the policy ID in the policy code received by the receive unit matches any one of the policy IDs in the policy information stored by the storage unit (#206). The received policy code has the policy ID "06h," which matches the policy ID "06h" in the policy information of the storage unit. Accordingly, the determination unit of the mobile terminal 303 extracts, from the policy information of the storage unit, the control policy "automatically forward inbound calls to the fixed telephone" indicated by the policy ID "06h," and sends the control policy to the compare unit.

The compare unit of the mobile terminal 303 compares the current policy ID stored by the storage unit with the extracted policy ID "06h" (#207). Here, the current policy ID of the mobile terminal 303 is "04h," and, con sequently, the compare unit determines that the extracted policy ID "06h" differs from the current policy ID "04h". The compare unit sends the comparison result to the storage unit and the control unit. Based on the comparison result, the storage unit modifies the position of the flag, which indicates the current policy ID, from the current policy ID "04h" to "06h."

The control unit of the mobile terminal 303, based on the control policy "automatically forward inbound calls to the fixed telephone" corresp onding to the policy ID "06h", automatically forwards inbound calls from the communication terminal to the inside -the-company fixed telephone 305 (#208). In so doing, a connection is established between the inside - the-company fixed telephone 305 and the co mmunication terminal. Thereby, it is possible to conduct a call between the inside -the-company fixed telephone 305 and the communication terminal (#209, 210).

### (4) EFFECTS

The control policy specification system of the RFID tag according to the present invention can be adapted to a system that automatically forwards calls to a fixed telephone in the company interior 302. Generally, the calling charge between a communication terminal, such as a fixed telephone and a mobile terminal, and the mobile termina 1303 is higher than the calling charge between a communication terminal and a fixed telephone. If the control policy specification system of the present invention is used as a system to automatically forward calls to the fixed telephone, as in the present embodiment, then inbound calls to the mobile terminal 303 are forwarded to the fixed telephone 305. Consequently, calls can be conducted between the communication terminal and the fixed telephone 305. Accordingly, the calling charge of the communication terminal becomes less expensive than that of a call with a mobile terminal 303. If the owner of the communication terminal is the owner of the mobile terminal 303, i.e., a company, then it is possible to reduce the overhead expenses of the company.

Furthermore, the present embodiment discussed a case wherein the RFID tag 307 is a passive tag, but the present embodiment can also be adapted even if it is an active tag. In this case, the mobile terminal 303 receives the policy code ID continually sent from th e RFID tag 307, searches, compares, and controls its own terminal based on the control policy corresponding to the policy ID.

### <OTHER EMBODIMENTS>

### (1) FIRST EXAMPLE

Let us consider a case wherein there is an RFID tag 501, which is a passive tag, and a plurality of mobile terminals 502a, b inside one area. In this case, the mobile terminals 502a, b may receive the policy code from the RFID tag 501 using the LBT (Listen Before Talk) method. The LBT method is one wherein each of the mobile terminals 502a, b uses radio waves to check, at an arbitrary timing generated by a prescribed event such as an inbound call, whether the other mobile terminal is receiving the policy code from the RFID tag.

For example, if the other mobile terminal 502b is not receiving the policy code from the RFID tag 501, then the mobile terminal 502a sends a request to the RFID tag 501 to send the policy code. If the other mobile terminal 502b is receiving the policy code from the RFID tag 501, then the mobile terminal 502a may intercept the policy code during its reception by the other mobile terminal 502b. Furthermore, the mobile terminal 502a determines and compares the policy ID in the intercepted policy code. If the intercepted policy ID differs from the current policy ID, then the mobile terminal 502a controls its own terminal based on the control policy indicated by the intercepted policy ID.

Thereby, even if the timing at which both mobile terminals 502a, b send a policy code send request is identical, both mobile terminals 50 2a, b do not simultaneously send a policy code send request to the RFID tag 501. Namely, the timing at which both mobile terminals 502a, b send a policy code send request to the RFID tag 501 does not overlap. Accordingly, it is possible to avoid a collision among policy code send requests that are sent by the mobile terminals 502a, b.

### (2) SECOND EXAMPLE

Let us consider a case wherein there is an RFID tag 601, which is a passive tag, and a plurality of mobile terminals 602a, b in one area. In this case, w hen each of the mobile terminals 602a, b receives the policy code from the RFID tag 601, it first searches only for the "applicable equipment code" of the policy code. In so doing, the determination unit of each of the mobile terminals 602a, b searches for the applicable equipment code in the received policy code and determines whether or not the applicable equipment code is that of its own terminal. The receive unit receives the remaining contents of the policy code, i.e., the policy ID, only if the applicable equipment code in the received policy code matches the equipment code of its own terminal. In other words, each of the mobile terminals 602a, b receives only the policy code from the RFID tag 601 intended for its own terminal. Thereby, because each of the mobile terminals 602a, b does not acquire a policy code not intended for its own terminal, the time needed by each of the mobile terminals 602a, b to receive the policy code from the RFID tag 601 is shortened. Accordingly, it is possible to avoid an overlap in the times when the plurality of the mobile terminals 602a, b receive the policy code from the RFID tag 601.

### (3) THIRD EXAMPLE

Let us consider a case wherein a user who owns a mobile terminal 701 blocks, such as by a shield, the data receiving portion in the mobile terminal 701. In this case, the mobile terminal 701 cannot receive data, such as the policy code that includes the policy ID, from an RFID tag 702. Assuming such a case, a sensor may be embedded in the data receiving portion of the mobile terminal 701. The sensor detects the distance between the data receiving portion and the object closest thereto. If the distance detected by the sensor is extremely short, then the control unit of the mobile terminal 701 determines that the user is bl ocking the data receiving portion. Furthermore, the mobile terminal 701 controls its own terminal by, for example, setting it to a state wherein it rejects inbound calls and reception. The method of controlling its own terminal may be one that prompts the user to desist from blocking the data receiving portion. Thereby, it is possible to prevent a case wherein the user does not follow the policy of the area.

### [INDUSTRIAL FIELD OF APPLICATION]

The present invention can be adapted to a mobile terminal that is capable of communication and easy carrying, such as a mobile telephone or a PDA. In addition, the control policy specification system according to the present invention should be used in an area that has a specified policy, such as a hospital, a concert hall, a movie theater, a museum, on a train, or inside a company.

## Claims

1. A mobile terminal that receives data from an RFID (Radio Frequency IDentification) tag, comprising:
a storing unit that associates and stores control policies which control sai d mobile terminal with policy identifiers which identify said control policies;
a determining unit that determines whether any one of the policy identifiers stored by said storing unit is included in said received data; and
a controlling unit that will, if said determining unit has determined that any one of said stored policy identifiers is included in said received data, control said mobile terminal based on the control policy associated with the received policy identifier.

2. A mobile terminal as recited in Claim 1, further comprising:
a sending unit that sends a request to said RFID tag to send said policy identifier at an arbitrary timing generated by a prescribed event at the mobile terminal.

3. A mobile terminal as recited in Claim 2, further com prising:
a communicating unit that communicates with other terminals,
wherein,
said sending unit interrupts communication in said communicating unit and sends a request to said RFID tag to send said policy identifier.

4. A mobile terminal as recited in Claim 2, further comprising:
a communicating unit that communicates with other terminals;
wherein,
said sending unit detects the end of communication in said communicating unit and sends a request to said RFID tag to send said policy identifier.

5. A mobile terminal as recited in Claim 2, further comprising:
a first detecting unit that detects an instruction from a user of the mobile terminal;
wherein,
if said first detecting unit has detected an instruction from said user, then said sending unit will send a request to said RFID tag to send said policy identifier.

6. A mobile terminal as recited in Claim 2, wherein
said storing unit further stores an arbitrary application, and further comprises a second detecting unit that detects the startup of s aid stored application;
wherein,
if said second detecting unit has detected the startup of said stored application, then said sending unit will send a request to said RFID tag to send said policy identifier.

7. A mobile terminal as recited in Claim 1, wherein
said storing unit discriminates the current policy identifier that identifies the current control policy of the mobile terminal; and
said determining unit determines whether any one of the policy identifiers stored by said storing unit is included in the newly received data every time data is received;
further comprising:
a comparing unit that will, if said determin ing unit has determined that any one of said stored policy identifiers is included in said newly received data, compare said newly received policy identifier and said current policy identifier;
wherein,
if said newly received policy identifier and said current policy identifier are different, then said storing unit will store said newly received policy identifier as the current policy identifier.

8. A control policy specifying method for a mobile terminal that receives data from an RFID tag, comprising the steps of:
associating and storing control policies which control said mobile terminal with policy identifiers which identify sai d control policy;
determining whether any one of said stored policy identifiers is included in said received data; and
if it is determined that any one of said stored policy identifiers is included in said received data, then controlling the mobile terminal based on the control policy associated with the received policy identifier.

9. A control policy specification system that comprises a plurality of RFID tags and a mobile terminal that receives data from said plurality of RFID tags, wherein
said mobile terminal comprises:
a storing unit that associates and stores control policies which control said mobile terminal with policy identifiers which identify said control policy;
a determining unit that determines whether any one of the policy identifiers stored by said storing unit is included in said received data; and
a controlling unit that will, if said determining unit has determined that any one of said stored policy identifiers is included in said received data, control the mobile terminal based on the control policy associated with the received policy identifier; and
each of said plurality of RFID tags comprises:
a generating unit that generates a slot for each of said RFID tags based on unique information that identifies each RFID tag; and
a sending unit that uses said slot generated by said generating unit to sequentially and time divisionally send said policy identifier.

10. A control policy specification system as recited in Claim 9, wherein
said mobile terminal further comprises a sending unit that sends a request to each of said plurality of RFID tags to send said policy identifier; and
if said policy identifier has been received from at least one RFID tag among said plurality of RFID tags, then said determining unit will stop said sending unit from sending a request to send said policy identifier.

11. A control policy specification program executed by a computer installed on a mobile terminal that receives data from an RFID tag, wherein
said control policy specification program causes said computer to function as:
a storing unit that associates and stores control policies which control said mobile terminal with policy identifiers which identify said control policies;
a determining unit that determines whether any one of the policy ide ntifiers stored by said storing unit is included in said received data; and
a controlling unit that will, if said determining unit has determined that any one of said stored policy identifiers is included in said received data, control the mobile terminal based on the control policy associated with the received policy identifier.
